Europäisches Patentamt

(19) European Patent Office  (11) Publication number: **0 044 600**

Office européen des brevets  **B1**

(12) EUROPEAN PATENT SPECIFICATION

(45) Date of publication of patent specification: **02.05.85**  (51) Int. Cl.⁴: **B 32 B 31/30,** B 05 D 1/26

(21) Application number: **81200817.5**

(22) Date of filing: **16.07.81**

(54) **Process of bonding a thin layer of a plastic to a substrate.**

(30) Priority: **17.07.80 NL 8004117**

(43) Date of publication of application:
**27.01.82 Bulletin 82/04**

(45) Publication of the grant of the patent:
**02.05.85 Bulletin 85/18**

(84) Designated Contracting States:
**BE DE FR GB NL SE**

(56) References cited:
**DE-C- 845 564**
**FR-A-1 456 532**
**GB-A- 826 290**
**GB-A-1 011 624**

**E.E. GRIESSER: "Polyethylene extrusion coating new developments", part II, coating (Union Carbide), New York, U.S.A.**

(73) Proprietor: **STAMICARBON B.V.**
**Postbus 10**
**NL-6160 MC Geleen (NL)**

(72) Inventor: **Van den Hof, Richard Paul Alfred**
**Adelaarstraat 2**
**NL-6121 CA Born (NL)**
Inventor: **Kokelkoren, Leonard Jozef Catharina**
**Dr. Poelsstraat 34**
**NL-6436 BG Amstenrade (NL)**

(74) Representative: **Hoogstraten, Willem Cornelis Roeland et al**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 044 600

## Description

The invention relates to a process of bonding a thin layer of a plastic to a substrate, by applying to a substrate a melted plastic film prepared by means of a slot-die extruder in which process the bonding side of the film is heat treated in an air gap between the die and the substrate so that in correlation with the duration of its travel through the air gap the bonding side reaches a sufficiently chemical modification required to obtain a desired bonding value.

Such a process is known from a publication of Union Carbide Corp.: "Polyethylene extrusion coating new developments" part II, coating. New York U.S.A. by E. E. Griesser. In this publication a process is described in which radiation heaters are used in the air gap in order to maintain the temperature of the film, during its travel through the air gap, at a level equal to the temperature of the film at leaving the extruder.

In such a process used for bonding a thin layer of a plastic to a substrate, e.g. aluminium or plastic films or paper, the plastic, e.g. low-density polyethylene, is processed to a homogeneous melt in an extruder. Thereafter the melt is formed into a thin layer—hereinafter to be called film—, by passing it through a slot-shaped die, and this film is applied, still in the melted condition and after it has passed through an air gap, to a continuously moving substrate in the form of a sheet or web. The laminate obtained in this way is next cooled. The substrate is below the slot-shaped die so that the film is moved vertically over a certain distance whilst being applied. The term "air gap" used here is meant to denote this vertical distance.

The side of the film which comes into contact with the substrate is called the bonding side. If there is only one substrate, the other side is called the exposed side. If a film is applied between two substrates, both film sides are bonding sides.

To obtain a good bond—expressed in a so-called bonding value between the plastic and the substrate it is necessary for the melt to undergo a degree of oxidation. This chemical modification of the film surface, which promotes the bonding, takes place in the air gap. The air gap should not be made too wide, in view of the necking of the film. The time taken by the film to pass through the air gap is very short with the usually applied very high production rates. The result of these circumstances is that the temperature of the melt must be made very high, so as to make it possible for the chemical modification, necessary to effect good bonding, to take place within the time the film travels through the air gap.

By production rate (Va) is here understood the rate at which the film is taken off at the place where it is joined to the substrate. As the film is also stretched in the air gap, the production rate is much higher than the rate at which the film leaves the exit opening of the extruder die (Vu). If Va increases, with equal thickness of the film on the substrate, Vu will have to increase too. If Vu and Va both increase, the average speed of the film in the air gap increases too, so that the passage time decreases. Also if Vu remains constant when Va increases, the passage time becomes shorter, but in this case the film thickness on the substrate decreases as well.

With a given air gap higher production rates, i.e. shorter passage times, require higher melt temperatures if the required chemical modification is to be effected in the shorter passage time. The use of higher temperatures has an adverse effect on the quality of the plastic, because the plastic will, in dependence on the length of time during which it is exposed to that temperature, come to show degradation or decompostion effects. In an extruder in which the plastic is heated to the required temperature by heat supply or heat dissipation as a result of friction, fairly long residence times are normal. Therefore there is a certain top limit to the temperature of the melt leaving the extruder, at which the quality of the plastic is still on a level that is acceptable in view of the purpose for which the plastic is to be used. Because there is such a top temperature limit there is also a top limit to the production rate that can be reached.

The object of the invention is to provide a process of bonding a thin layer of a plastic to a substrate by applying to a substrate a melted plastic film produced by means of a die-slot extruder, in which process the bonding side of the film is heat treated in an air gap between the die and the substrate so that in correlation with the duration of its travel through the air gap the bonding side reaches a sufficiently chemical modification required to obtain a desired bonding value, this process allowing, on a given extruder, the use of higher production rates with equal or better bonding values, or allowing the attainment of better bonding values with equal production rate.

This is achieved in that the bonding side of the film, is additionally heated in the air gap, to a temperature at least 10°C above the temperature at which the film leaves the extruder.

The said additional heating is preferably effected by raising the temperature of the bonding side of the film when this is travelling through the air gap. This can advantageously be achieved by means of infra-red radiation.

Another method for effecting additional heating may be setting the temperature of the lip of the extruder slot on the bonding side of the film to a suitable elevated value.

Additional heating can be realized also by the use of a combination of the two measures described above.

With application of the process according to the invention it is no longer necessary to heat up the entire plastic mass in the extruder to the temperature needed for achieving a certain degree of chemical modification. Only the plastic material on the bonding side of the film is additionally raised in temperature to a value needed to achieve the chemical modification required for the bonding. This means that the production rate can be raised without the extruder being required to give a higher temperature to the melt it produces. There is the additional advantage that the total energy to be supplied can be reduced.

As already indicated, the heating of the bonding side of the film is preferably effected in the air gap by means of infra-red radiation. This is because it enables a desirable flexibility in process control to be obtained as regards the film heating rate and the depth to which the heat penetrates.

The invention will be elucidated by means of the following example and with reference to the graph.

Example

Low-density polyethylene (STAMYLAN 1300 C, melt index 7.5 dg/min) was processed in a single-screw extruder to a homogeneous melt and applied through a slot-shaped orifice in the form of a melted film to a continuously moving aluminium film.

| | |
|---|---|
| Length of the extruder slot | 500 mm |
| Width of the extruder slot | 0.43 mm |
| Width of the air gap | 130 mm |
| Final film thickness | 0.02—0.055 mm |

By means of a rod-shaped infra-red lamp (220 V, 800 W) placed at a distance of 0.04 m from the film, infra-red radiation could be aimed at the film-shaped plastic melt leaving the extruder. Four series of experiments were carried out, A, B, C and D:

Series A (without infra-red radiation)

With a melt having a temperature of 295°C on leaving the extruder laminate was produced at various production rates (Va), and the bonding values of the plastic on the aluminium film obtained at the various production rates were measured by a method to be discussed below. The results of this series of experiments are indicated by line A in the graph.

Series B (without infra-red radiation)

With a melt leaving the extruder at 305°C, and under otherwise equal conditions as indicated for experiment series A, the bonding values obtained at various production rates were measured. See line B in the graph.

Series C (with infra-red radiation)

The experiments of series A were repeated, but now the bonding side of the film was irradiated in the air gap by means of the infra-red radiation source. The bonding values obtained at the various production rates lay virtually on line B when plotted in the graph. Obviously, the bonding side of the film had been raised in temperature by 10°C as a result of the irradiation by the infra-red source.

Series D (with infra-red radiation)

The experiments of series B were repeated. Now, however, the bonding film side was irradiated in the air gap by means of the infra-red source. The bonding values found at the various production rates are represented by line D in the graph.

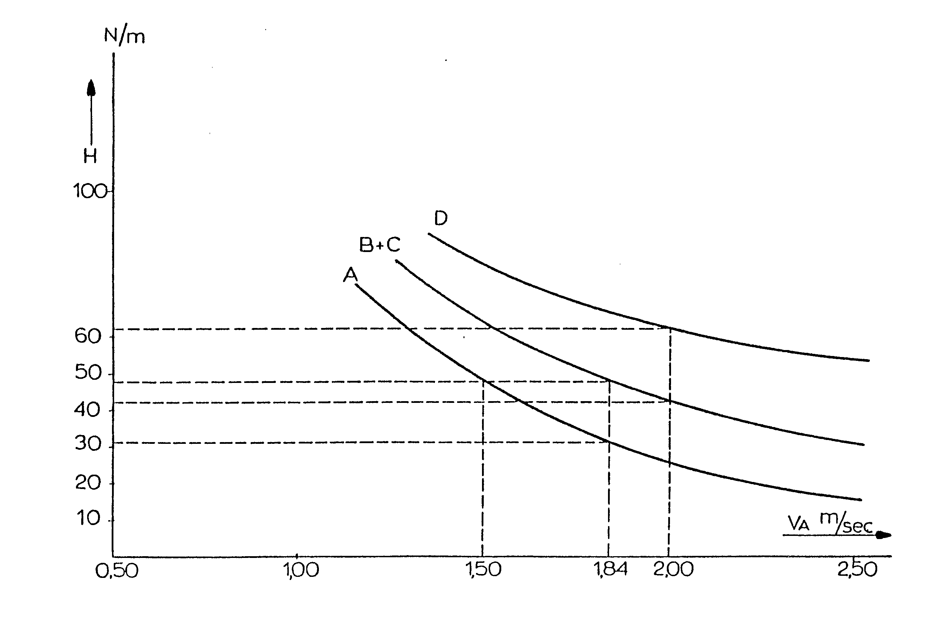

The figure shows that in the experiments of series A with a production rate Va=1.5 m/s a bonding value of 48 N/m is reached. If with the same exit temperature of 295°C the production rate is raised to 1.84 m/s, the bonding value drops to 31 N/m. To maintain the former bonding value at this Va of 1.84 m/s it is necessary either to raise the exit temperature of the film to 305°C, which is attended with increased degradation of the product, or, according to the invention, to raise only the temperature of the bonding side to 305°C, which is the preferred method. See the coinciding lines B and C in the graph.

The figure also shows that by means of the process according to the invention better bonding values can be obtained at a given Va without raising the exit temperature of the melt. If the production rate at 305°C without infra-red irradiation is, for instance, 2 m/s—line B—then at the same Va the bonding value rises from 42 N/m to 62 N/m if infra-red irradiation is applied—line D.

The bonding values obtained in the experiments are measured as follows. The layers of a rectangular piece of laminate having a width of x metres are pulled apart parallel to the width. The severed layers are in line, and the laminate and the severed layers are at angles of 90°. The severing force K is measured. The bonding value H amounts to K/x, and is expressed in N/m. Of a film produced on the equipment used in the experiment series described above the surface temperature at the bonding side of the film was measured in the air gap at distances of 3 cm and 6 cm from the die crifice. Measurements were made on this film and without it being subjected to infra-red irradiation. The setting of the extruder temperature was 305°C, and the value of Va was 1 m/s. The measurements were repeated with Va=1.5 m/s. The temperature measurements were performed by means of an Ircon model CH 34 LC radiation pyrometer. The results of all temperature measurements are shown in the following table.

# 0 044 600

TABLE

| | Distance from die orifice 3 cm | | Distance from die orifice 6 cm | |
|---|---|---|---|---|
| | Va=1 m/s | Va=1.5 m/s | Va=1 m/s | Va=1.5 m/s |
| Temp. of film without infra-red irr. °C | 300 | 303 | 294 | 300 |
| Temp. of film with infra-red irr., °C | 307 | 320 | 315 | 334 |

The table shows that when infra-red radiation is applied, as in the experiments of series C and D, a clear rise in temperature occurs from 305°C up, so that there is not only compensation for the heat loss, but—according to the invention—additional heating must take place to arrive at the desired bonding values and/or higher production rates.

The invention now also provides the possibility to use a lower extruder temperature in coating with a highly heat-sensitive plastic and yet attain very acceptable bonding values.

## Claims

1. Process of bonding a thin layer of a plastic to a substrate by applying to said substrate a melted plastic film produced by means of a slot-die extruder in which process the bonding side of the film is heat treated in an air gap between the die and the substrate so that in correlation with the duration of its travel through the air gap the bonding side reaches a sufficiently chemical modification required to obtain a desired bonding value, the process being characterized in that the bonding side of the film is additionally heated in the air gap to a temperature at least 10°C above the temperature at which the film leaves the extruder.

2. Process according to claim 1, characterized in that the additional heating is effected, at least in part, by irradiating the film with infra-red radiation during its travel through the air gap.

3. Process according to claim 1 or 2, characterized in that the additional heating is effected, at least in part, by means of a suitable setting of the temperature of the lip of the extruder slot on the bonding side of the film.

4. Process according to any one of the claims 1—3, characterized in that the film is bonded between two substrates.

## Patentansprüche

1. Verfahren zum Verbinden einer dünnen Folie aus Kunststoff mit einem Substrat durch Aufbringen einer mit einem Schlitzdüsenextruder hergestellten geschmolzenen Kunststoffolie auf das Substrat, wobei die Bindeseite der Folie in einem Luftspalt zwischen der Düse und dem Substrat wärmebehandelt wird, so daß die Bindeseite in Abhängigkeit von der Dauer ihrer Bewegung durch den Luftspalt eine ausreichende chemische Veränderung erfährt, die erforderlich ist, um einen gewünschten Bindewert zu erreichen, dadurch gekennzeichnet, daß die Bindeseite der Folie zusätzlich in dem Luftspalt auf eine Temperatur erhitzt wird, die wenigstens 10°C über der Temperatur liegt, mit der die Folie den Extruder verläßt.

2. Verfahren nach Anspruch 1, dadurch gekennzeichnet, daß die zusätzliche Erwärmung mindestens teilweise durch Infrarotbestrahlung der Folie während ihrer Bewegung durch den Luftspalt erfolgt.

3. Verfahren nach den Ansprüchen 1 oder 2, dadurch gekennzeichnet, daß die zusätzliche Erwärmung mindestens teilweise durch eine entsprechende Einstellung der Temperatur des Extruderschlitzrandes auf der Bindeseite der Folie erfolgt.

4. Verfahren nach einem der Ansprüche 1 bis 3, dadurch gekennzeichnet, daß die Folie zwischen zwei Substraten verbunden wird.

## Revendications

1. Procédé de liaison d'une couche mince en matière plastique à un substrat, par application sur ledit substrat d'un film de plastique fondu produit au moyen d'une extrudeuse munie d'une buse à fente, dans lequel la face de collage du film est traitée thermiquement dans l'espace d'air entre la buse et le substrat de sorte que, en corrélation avec la durée de son trajet dans cet espace d'air la face de collage atteigne une modification chimique suffisante requise pour obtenir un pouvoir adhésif souhaité, caractérisé en ce que la face de collage du film est chauffé additionnellement dans l'espace d'air à une température au moins supérieure de 10°C à la température à laquelle le film sort de l'extrudeuse.

2. Procédé selon la revendication 7, caractérisé en ce que le chauffage additionnel est effectué, au moins en partie, par irradiation du film par radiation infra-rouge pendant son trajet dans l'espace d'air.

4

3. Procédé selon la revendication 1 ou 2, caractérisé en ce que le chauffage additionnel est effectué, au moins en partie, au moyen d'un réglage adapté de la température de la lèvre de la buse de l'extrudeuse se trouvant sur la face de collage du film.

4. Procédé selon l'une quelconque des revendications 1—3, caractérisé en ce que le film est collé entre deux substrats.